# EUROPEAN PATENT APPLICATION

(11) **EP 2 479 932 A1**
(43) Date of publication of application: **25.07.2012**
(21) Application number: 10816702.4
(22) Date of filing: 15.09.2010
(51) Int. Cl.: H04L 12/28

(54) **METHOD AND SYSTEM FOR ALLOCATING POSITION IDENTIFIER AND TRANSMITTING MESSAGE**

(30) Priority: 17.09.2009 CN 200910171975; 16.10.2009 CN 200910205562
(71) Applicant: ZTE Corporation, Shenzhen, Guangdong 518057 (CN)
(72) Inventor: WU, Qiang, Shenzhen City Guangdong 518057 (CN); FU, Tao, Shenzhen Guangdong 518057 (CN); HE, Hui, Shenzhen City Guangdong 518057 (CN)
(74) Representative: Krauns, Christian
(86) International application number: PCT/CN2010/076956
(87) International publication number: WO 2011/032498

(57) **Abstract**

The present invention discloses a method for allocating a location identifier, and the method includes: a terminal requesting to access an access node through an access network; after receiving the access request of the terminal, the access node allocating a location identifier to the terminal; wherein the access node allocates the same location identifier to multiple terminals. The present invention is based on a network architecture with separated location and identity, and there is no direct relationship between the change of the location of the access terminal and the network topology, so the impact of the terminal mobility on routing can be eliminated; an access service node (ASN) can allocate the same routing identifier (RID) to multiple access users, thereby greatly reducing the number of routings in a general forwarding plane; based on the technical principle of the location/identity separation, the main affecting factors of the network topology in the general forwarding plane are the number and deployment mode of the functional entities such as ASN and Identification Service Node (ISN), and the change of the network topology can not affect the identity identifier of the access terminal, and the network topology can be adjusted conveniently.

## Description

### Technical Field

The present invention relates to the technical field of communication, and in particular, to a method and system for allocating a location identifier and sending a message.

### Background Art

The IP address has dual functions in TCP/IP (Transmission Control Protocol/Internet Protocol) widely used in the existing Internet, i.e., the IP address serves not only as the location identifier of the communication terminal network interface of the network layer in the network topology, but also as the identity identifier of the host network interface of the transmission layer. The case of host mobility was not taken into consideration when the existing TCP/IP protocol was initially designed. However, as host mobility becomes more and more popular, the defect of semantics overload of this kind of IP address becomes more and more apparent.

An IP address comprises a network prefix and a host part, and all hosts on the same link generally have the same network prefix and different host parts. The identity attribute of the IP address requires that the IP address should not change as the terminal location changes, so as to ensure that the communication bound to the identity will not discontinue, and also to ensure that after the terminal moves, other terminals can still establish communication connection with the terminal using its identity; while the location attribute of the IP address requires that the IP address changes with the change of the terminal location so that the IP address can converge in the new network topology, otherwise, the network will have to keep separate routing information for the terminal after movement, thus causing sharp rise of the items in the routing table.

When the network topology changes, the IP address of the terminal has to be adjusted. When the host moves, the allocation of the IP address of the terminal will be affected by the change of the network topology. In this mechanism, the increasing host mobility requirement will increase the complexity of the network topology, thus causing rise of the items of the routing table and increase of change probability of the routing table.

The network having an identity identifier/location separation architecture has two types of identifiers: identity identifier, which is also called as an AID (Access Identifier) herein, and location identifier, which is also called as a RID (Routing Identifier) herein. Wherein, AID is the user identity identifier of the terminal, and the network uniquely allocates to each terminal user an AID, which will keep unchanged during the movement of the terminal; RID is a location identifier allocated to the terminal by the network. The identity identifier and the location identifier may have different names in different architectures.

### Summary of the Invention

The present invention provides a method and system for allocating a location identifier, which eliminates the impact of the terminal mobility on the routing and can alleviate routing load and support expansibility of routing.

In order to solve the above technical problem, the present invention provides a method for allocating a location identifier, which is applied to a network having an architecture with separated identity identifier and location identifier, and comprises the following steps of:
a terminal requesting to access to an access node through an access network;
after receiving the access request of the terminal, the access node allocating a location identifier to the terminal;
wherein the access node allocates a same location identifier to a plurality of terminals.

The access node may allocate the same location identifier to all terminals accessing the access node; or, the access node may group accessing terminals, allocate the same location identifier to a plurality of terminals in a same group, and allocate different location identifiers to terminals in different groups.

The method further comprises: the access node authenticating the terminal, and only allocating a location identifier to the terminal when the authentication is passed; and the access node locally storing mapping information between an identity identifier and the location identifier of the terminal, and initiating a registration flow for the terminal to a home identity location register of the terminal, with the mapping information being carried, and the identity location register storing or updating the mapping information between the identity identifier and the location identifier of the terminal upon receiving the mapping information.

The location identifier allocated by the access node to the accessing terminal may be address information pointing to the present access node, and when the location identifier is used as a destination address of a data message, the data message will be routed to the access node.

The present invention further provides a system having a network architecture with separated identity identifier and location identifier, comprising a terminal and a network having an architecture with separated identity identifier and location identifier, the network comprising an access network, an access node, a packet data network and an identity location register, the access node being a boundary node for connecting the access network with the packet data network, wherein:
the access network is configured to provide a two-layer access service for the terminal;
the packet data network is configured to implement routing and forwarding of a data message;
the identity location register is configured to store mapping information between an identity identifier and a location identifier of the terminal, and provide a function of querying the location identifier;
the access node is configured to provide an access service for the terminal to the packet data network, allocate the location identifier to an accessing terminal, maintain the mapping information between the identity identifier and the location identifier of the terminal, register the terminal at a home identity location register of the terminal and query a location identifier of a correspondent node, forward data messages between the access network and the packet data network, and implement terminal handover by coordinating with other access nodes;
and, the access node is configured to allocate the same location identifier to a plurality of terminals when allocating the location identifier to the accessing terminal.

The access node can be configured to allocate the same location identifier to all terminals accessing the access node; or, the access node may be configured to group accessing terminals, allocate the same location identifier to a plurality of terminals in a same group, and allocate different location identifiers to terminals in different groups;
the location identifier allocated by the access node to the accessing terminal may be address information pointing to the present access node, and when the allocated location identifier is used as a destination address of a data message, the data message will be routed to the access node.

The network may further comprise a packet transferring function, which is configured to receive a data message a destination address of which is an identity identifier, replace the identity identifier of the data message by a location identifier that is queried out and corresponds to the identity identifier, and then route and forward the data message to the access node which is queried out and the terminal accesses.

The access node may be further configured to establish a connection with each terminal respectively and establish a corresponding relationship between the connection and an identity identifier of the terminal; the access node may be configured to forward a data message between the access network and the packet data network in the following way: when the data message sent to the terminal accessing the present access node is received, finding a connection corresponding to the identity identifier according to the identity identifier of the terminal in the data message, and sending the data message to the terminal through the connection.

The access node may be configured to forward a data message between the access network and the packet data network in the following way: receiving a data message sent by a source terminal accessing the access node, with a source address of the data message being an identity identifier of the source terminal, and a destination address being an identity identifier of a destination terminal; locally querying a location identifier of the destination terminal according to the identity identifier of the destination terminal, if the location identifier is queried out, encapsulating the location identifier of the destination terminal in the data message as the destination address, and encapsulating a location identifier of the source terminal as the source address, and forwarding the data message to the access node which the destination terminal accesses through the packet data network. The access node may be further configured to transfer a data message between the access network and the packet data network in the following way: receiving a data message transferred via the packet data network, stripping off the location identifier in the received data message, and sending the data message to the destination terminal according to the identity identifier of the destination terminal of the data message.

The access node may be configured to query the location identifier of the correspondent node in the following way: if the location identifier of the destination terminal is not locally queried out, sending a request for querying the location identifier of the destination terminal to a home identity location register of the destination terminal, with the request carrying the identity identifier of the destination terminal; and after receiving a location identifier returned by the home identity location register of the destination terminal, locally storing mapping information between the identity identifier and the location identifier of the destination terminal.

The network may further comprise a packet transferring function; a first access node may be configured to transfer a data message between the access network and the packet data network in the following way: if the location identifier of the destination terminal is not locally queried out, encapsulating the location identifier of the source terminal in the data message as the source address, and sending the data message to a home packet transferring function of the destination terminal; after receiving the data message, the home packet transferring function of the destination terminal querying the location identifier corresponding to the identity identifier of the destination terminal, encapsulating the location identifier of the destination terminal in the data message as the destination address, and then sending the data message to the access node which the destination terminal accesses through the packet data network.

The present invention further provides a method for sending a message, which is applied to a system comprising a network having an architecture with separated identity identifier and location identifier, wherein a first terminal accesses a first access node, a second terminal accesses a second access node, the first access node and the second access node allocate a same location identifier to a plurality of accessing terminals respectively, and the method comprises:
the first terminal sending a data message to the second terminal via the first access node, with a source address of the data message being an identity identifier of the first terminal and a destination address being an identity identifier of the second terminal;
after receiving the data message, the first access node locally querying a location identifier of the second terminal according to the identity identifier of the second terminal, and if the location identifier is queried out, the first access node encapsulating the location identifier of the second terminal in the data message as the destination address, and encapsulating the location identifier of the first terminal as the source address, and forwarding the data message to the second access node through a packet data network;
the second access node stripping off the location identifiers of the first terminal and the second terminal in the data message, and sending the data message to the second terminal according to the identity identifier of the second terminal.

The method may further comprise: if the first access node fails to locally query out the location identifier of the second terminal, sending a request, which carries the identity identifier of the second terminal, for querying the location identifier of the second terminal to a home identity location register of the second terminal;
after receiving the querying request, the identity location register querying the location identifier of the second terminal according to the identity identifier of the second terminal and returning the location identifier of the second terminal to the first access node, and the first access node locally storing mapping information between the identity identifier and the location identifier of the second terminal.

The network may further comprise a packet forwarding function;
the method further comprises: if the first access node fails to locally query out the location identifier of the second terminal, encapsulating the location identifier of the first terminal in the data message as the source address, and sending the data message to a home packet forwarding function of the second terminal; after receiving the data message, the home packet transferring function of the second terminal querying the location identifier corresponding to the identity identifier of the second terminal, encapsulating the location identifier of the second terminal in the data message as the destination address, and then sending the data message to the second access node through the packet data network.

The present invention further provides a method for allocating a location identifier, which is applied to a system having an architecture with separated identity identifier and location identifier and comprises the following steps of:
when a terminal switches or roams from a first access node to a second access node, the second access node reallocating a location identifier to the terminal, wherein, the second access node allocates a same location identifier to a plurality of terminals;
the first access node releasing the location identifier allocated to the terminal.

The method may further comprise: the second access node locally storing mapping information between an identity identifier and the location identifier of the terminal, and initiating a registration flow for the terminal to a home identity location register of the terminal, with the mapping information being carried, and the identity location register storing or updating the mapping information between the identity identifier and the location identifier of the terminal after receiving the mapping information.

The present invention further provides a system for allocating a location identifier, which is applied to a network having an architecture with separated identity identifier and location identifier and comprises a terminal, a first access node and a second access node, wherein:
the second access node is configured to, when the terminal switches or roams from the first access node to the second access node, reallocate a location identifier to the terminal, wherein, the second access node is configured to allocate a same location identifier to a plurality of terminals;
the first access node is configured to release the location identifier allocated to the terminal.

The system may further comprise an identity location register, wherein:
the second access node is further configured to locally store mapping information between an identity identifier and the location identifier of the terminal, and initiate a registration flow for the terminal to a home identity location register of the terminal, with the mapping information being carried;
the identity location register is configured to store or update the mapping information between the identity identifier and the location identifier of the terminal.

The present invention is based on a network architecture with separated location and identity, and there is no direct relationship between the change of the location of the access terminal and the network topology, so the impact of the terminal mobility on routing can be eliminated; an access service node (ASN) can allocates the same routing identifier (RID) to multiple access users, thereby greatly reducing the number of routings in a general transferring plane; based on the technical principle of the location/identity separation, the main affecting factors of the network topology in the general transferring plane are the number and deployment mode of the functional entities such as ASN and Identification Service Node (ISN), and the change of the network topology can not affect the identity identifier of the access terminal, and the network topology can be adjusted conveniently.

### Brief Description of Drawings

FIG. 1 illustrates an architecture diagram of a network with separated identity identifier and location identifier.
FIG. 2 is a flowchart of a method for on-line registration of a user.
FIG. 3 is a flowchart of a method for communication between user terminals.

### Preferred Embodiments of the Present Invention

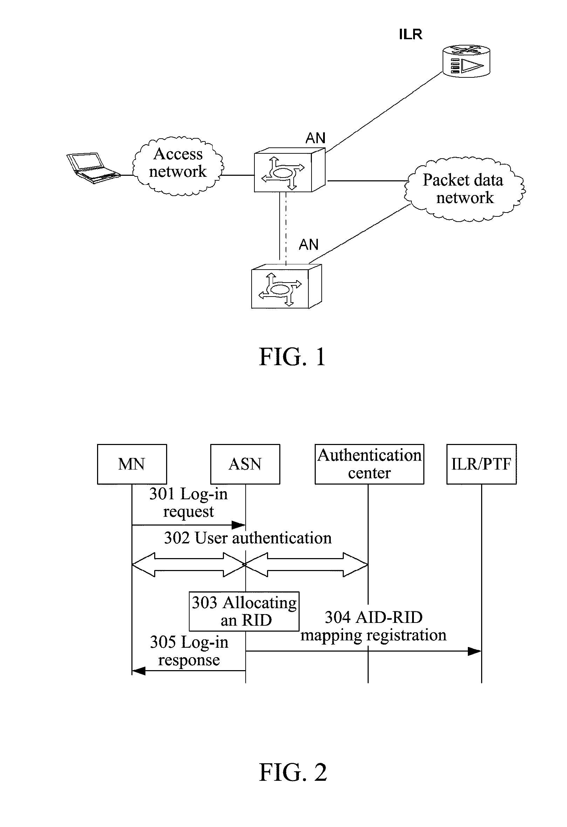

FIG. 1 shows part of the topology of the network having an architecture with separated identity identifier and location identifier, which comprises an access network, an access node, a packet data network and an identity location register. The access node, packet data network and the identity location register are components of a backbone network, and the RID is only used in the backbone network, wherein:
the access network provides a two-layer (physical layer and link layer) access service, and the access network may be a cell mobile network, a DSL (Digital Subscriber Line), a broadband optical fiber access network or an WiFi access network, etc.

The packet data network achieves routing and transferring of a data message, and may be, for example, an IP network.

The access node is a boundary node for connecting the wireless access network with the packet data network and is configured to provide an access service for the terminal to the packet data network, and in order to achieve separation of the identity identifier of the terminal from the location, the access node is further configured to allocate an RID to the terminal, maintain the AID-RID mapping information of the terminal, register to an ILR (Identity location register) and query the RID of the terminal, implement routing and transferring of the data message between the wireless access network and the packet data network, and implement terminal handover by coordinating with other access nodes, etc. The access node may correspond to one or more nodes in the existing network.

The ILR may be configured to store the AID-RID mapping information of the terminal and provide a function of querying the RID of the correspondent node.

The above network may further comprise a packet transferring function (PTF), which can be disposed collectively with the ILR and is configured to receive the data message whose destination address is an AID, replace the AID with the RID of the correspondent node that has been queried out (for example, it can be queried in the ILR or a local cache), and then route and transfer the data message to an ASN (Access Service Node) which the terminal accesses.

The network having an architecture with separated identity identifier and location identifier and the terminal capable of accessing the network constitute a system having an network architecture with separated identity identifier and location identifier.

The manners of allocation, registration and application of the RID in the network having an architecture with separated identity identifier and location identifier will be described below.

### Example one:

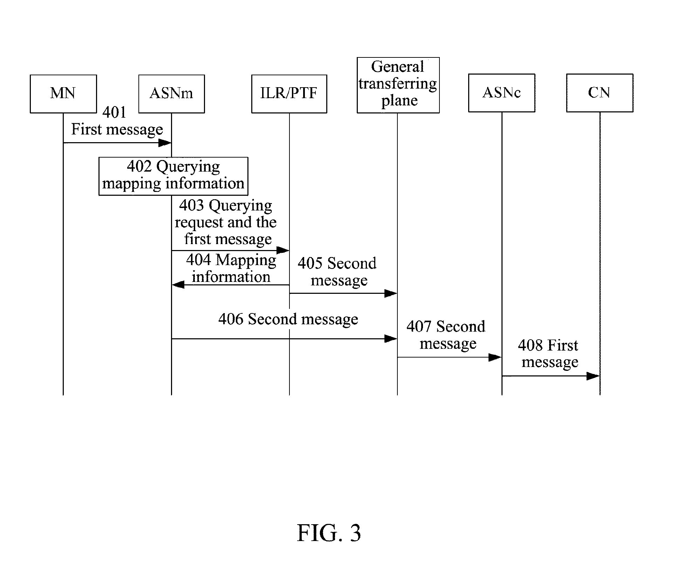

When a terminal (MN) is powered on and changes its location, the terminal initiates an access to the ILR through the accessed ASN. FIG. 3 is the flow of a terminal accessing into an ASN, which comprises the following steps.

In 301, the terminal sends an access request, which carries the AID information of the terminal, to the ASN through the access network;

In 302, after receiving the access request sent by the terminal, the ASN interacts with an authentication center and authenticates the terminal (for example judging whether the terminal is valid).

In 303, after the authentication is passed, the ASN allocates an RID to the terminal.

The RID allocated by the ASN refers to the address information pointing to the ASN, and when the location identifier is used as the destination address of a data message, the data message will be routed to the ASN.

The ASN can allocate different RIDs to different terminals accessing the present ASN, but in this example, the ASN allocates the same RID to different terminals accessing the present ASN, for example, it can allocate the same RID to all accessing terminals; or, the ASN groups the accessing terminals, and allocate the same RID to a plurality of terminals in the same group, and allocate different RIDs for terminals in different groups.

When the same RID is allocated to a plurality of terminals, a large number of RID resources may be saved, and the routing table in the network element in the backbone network will also be reduced.

In 304, the ASN locally caches the AID-RID mapping information of the terminal, and initiates a registering flow for the terminal to the home ILR of the terminal, and in this flow, the ASN sends the AID-RID mapping information of the terminal to the ILR, and after receiving the request the ILR stores the AID-RID mapping information of the terminal to be queried by the ASN which the correspondent node accesses in the subsequent communication process.

In 305, the ASN sends an access response to the terminal.

### Example two:

FIG. 4 shows a flow of end-to-end communication, which will be described by taking communication between a terminal MN and a terminal CN as an example. The terminal CN and terminal MN are a correspondent node for each other, and the identity identifier, location identifier and the accessed ASN of the MN are denoted by AIDm, RIDm and ASNm respectively; the identity identifier, location identifier and the accessed ASN of the CN are denoted by AIDc, RIDc and ASNc respectively. The communication process comprises the following steps.

In 401, the terminal MN sends to the correspondent node a data message, with the source address being AIDm and the destination address being AIDc.

In 402, after receiving the data message, the ASNm queries the AIDc-RIDc mapping information in the local AID-RID mapping table, and if the mapping information is not queried out, step 403 is executed; otherwise, step 406 is executed.

In 403, the ASNm sends to a mapping forwarding plane a request for querying the AIDc-RIDc mapping information, and forwards the data message to the mapping transferring plane.

Specifically, the querying request may be sent to the home ILR of the terminal MN, and the data message may be forwarded to the home PTF of the terminal MN.

In 404, after receiving the querying request, the mapping transferring plane returns the AIDc-RIDc mapping information to the ASN, and the ASN locally stores the AIDc-RIDc mapping information after receiving the AIDc-RIDc mapping information.

In 405, after receiving the data message sent out by the ASN, the mapping transferring plane queries the corresponding AIDc-RIDc mapping item, encapsulates the data message by taking the RIDm corresponding to the AIDm as the source address and the RIDc as the destination address, and then forwards the data message to a general transferring plane, turning to 407.

In 406, the ASNm encapsulates the RIDm as the source address and the RIDc as the destination address in the data message and then forwards the data message to the general transferring plane.

In 407, the general transferring plane routes the data message to the ASNc according to RIDc.

In 408, after receiving the data message, the ASNc strips off the encapsulated RIDm and RIDc, and sends the dsata message to the correspondent node CN according to the AIDc therein.

The connection established between the ASNc and the CN comprises the AID information of the CN, and the ASNc can send the data message to the CN through the corresponding connection according to the AID information of the CN. The connections established between different terminals and the ASN are different.

During the process of routing the data message of the terminal user by the general transferring plane, the RID as the destination address is taken as the routing information.

In addition, in the scenes of handover and roaming, after the terminal has an across-ASN handover, the ASN which the terminal accesses will allocate a new RID to the terminal, locally stores a mapping relationship between the AID and the new RID of the terminal, and initiates a registration flow for the terminal to the ILR, sends the new AID-RID mapping information of the terminal to the ILR, which then, after receiving the request, updates the stored AID-RID mapping information of the terminal so as to be queried by the correspondent node during the subsequent communication process. After the handover is completed, the ASN which the terminal originally accesses releases the RID allocated to the terminal.

In addition, in a case where the terminal user voluntarily gets off the line, the network requires the terminal to get off the line, or the network detects that the terminal is off line, and so on, the ASN, after determining that the terminal is off line, releases the RID of the terminal, and deletes the locally cached AID-RID mapping information of the terminal, and other terminal user using the RID still continue to use the RID. The ASN initiates a flow of canceling registration of the terminal to the ILR, and the ILR sets the current state of the terminal to be off line, and when the ASN which the correspondent node accesses queries the RID of the terminal to the ILR subsequently, the ILR returns the state of the terminal as off line.

### Industrial Applicability

Compared with the related art, in the present invention, the impact of the terminal mobility on the routing is eliminated, the number of routings in the general transferring plane is greatly reduced; moreover, the change of network topology will not influence the identity identifier of the accessing terminal, and the network topology can be adjusted conveniently.

## Claims

1. A method for allocating a location identifier, which is applied to a network having an architecture with separated identity identifier and location identifier, and the method comprises the following steps of:
a terminal requesting to access to an access node through an access network;
after receiving an access request of the terminal, the access node allocating a location identifier to the terminal;
wherein, the access node allocates a same location identifier to a plurality of terminals.

2. The method according to claim 1, wherein, the access node allocating a same location identifier to a plurality of terminals means that:
the access node allocates the same location identifier to all terminals accessing the access node;
or, the access node groups accessing terminals, allocates the same location identifier to a plurality of terminals in a same group, and allocates different location identifiers to terminals in different groups.

3. The method according to claim 2, wherein, before the step of the access node allocating a location identifier to the terminal, the method further comprises: the access node authenticating the terminal, and only allocating a location identifier to the terminal when the authentication is passed;
the method further comprises: the access node locally storing mapping information between an identity identifier and the location identifier of the terminal, and initiating a registration flow for the terminal to a home identity location register of the terminal, with the mapping information being carried, and the identity location register storing or updating the mapping information between the identity identifier and the location identifier of the terminal upon receiving the mapping information.

4. The method according to claim 1 or 2, wherein,
the location identifier allocated by the access node to the accessing terminal is address information pointing to the present access node, and when the location identifier is used as a destination address of a data message, the data message will be routed to the access node.

5. A system having a network architecture with separated identity identifier and location identifier, comprising a terminal and a network having an architecture with separated identity identifier and location identifier, wherein the network comprises an access network, an access node, a packet data network and an identity location register, the access node is a boundary node for connecting the access network with the packet data network, wherein:
the access network is configured to provide a two-layer access service for the terminal;
the packet data network is configured to implement routing and forwarding of a data message;
the identity location register is configured to store mapping information between an identity identifier and a location identifier of the terminal, and provide a function of querying the location identifier;
the access node is configured to provide an access service for the terminal to the packet data network, allocate the location identifier to an accessing terminal, maintain the mapping information between the identity identifier and the location identifier of the terminal, register the terminal at a home identity location register of the terminal and query a location identifier of a correspondent node, forward data messages between the access network and the packet data network, and implement terminal handover by coordinating with other access nodes;
and, the access node is configured to allocate the same location identifier to a plurality of terminals when allocating the location identifier to the accessing terminal.

6. The system according to claim 5, wherein,
the access node is configured to allocate the same location identifier to a plurality of terminals in the following way: allocating the same location identifier to all terminals accessing the access node; or, grouping accessing terminals, allocating the same location identifier to a plurality of terminals in a same group, and allocating different location identifiers to terminals in different groups; wherein,
the location identifier allocated by the access node to the accessing terminal is address information pointing to the present access node, and when the allocated location identifier is used as a destination address of a data message, the data message will be routed to the access node.

7. The system according to claim 5 or 6, wherein,
the network further comprises a packet forwarding function, which is configured to receive a data message a destination address of which is an identity identifier, replace the identity identifier of the data message by a location identifier that is queried out and corresponds to the identity identifier, and then route and forward the data message to the access node which is queried out and the terminal accesses.

8. The system according to claim 5 or 6, wherein, the access node is further configured to establish a connection with each terminal respectively and establish a corresponding relationship between the connection and an identity identifier of the terminal;
the access node is configured to forward a data message between the access network and the packet data network in the following way: when the data message sent to the terminal accessing the present access node is received, finding a connection corresponding to the identity identifier according to the identity identifier of the terminal in the data message, and sending the data message to the terminal through the connection.

9. The system according to claim 5, wherein, the access node is configured to forward a data message between the access network and the packet data network in the following way:
receiving a data message sent by a source terminal accessing the access node, with a source address of the data message being an identity identifier of the source terminal, and a destination address being an identity identifier of a destination terminal; and
locally querying a location identifier of the destination terminal according to the identity identifier of the destination terminal, if the location identifier is queried out, encapsulating the location identifier of the destination terminal in the data message as the destination address, and encapsulating a location identifier of the source terminal as the source address, and forwarding the encapsulated data message to the access node which the destination terminal accesses through the packet data network.

10. The system according to claim 9, wherein,
the access node is further configured to forward a data message between the access network and the packet data network in the following way: receiving a data message forwarded via the packet data network, stripping off the location identifier in the received data message, and sending the data message to the destination terminal according to the identity identifier of the destination terminal of the data message.

11. The system according to claim 9, wherein,
the access node is configured to query the location identifier of the correspondent node in the following way: if the location identifier of the destination terminal is not locally queried out, sending a request for querying the location identifier of the destination terminal to a home identity location register of the destination terminal, with the identity identifier of the destination terminal; and after receiving a location identifier returned by the home identity location register of the destination terminal, locally storing mapping information between the identity identifier and the location identifier of the destination terminal.

12. The system according to claim 9, wherein,
the network further comprises a packet forwarding function;
a first access node is further configured to forward a data message between the access network and the packet data network in the following way:
if the location identifier of the destination terminal is not locally queried out, encapsulating the location identifier of the source terminal in the data message as the source address, and sending the data message to a home packet forwarding function of the destination terminal;
after receiving the data message, the home packet forwarding function of the destination terminal querying the location identifier corresponding to the identity identifier of the destination terminal, encapsulating the location identifier of the destination terminal in the data message as the destination address, and then sending the data message to the access node which the destination terminal accesses through the packet data network.

13. A method for sending a message, which is applied to a system comprising a network having an architecture with separated identity identifier and location identifier, wherein a first terminal accesses a first access node, a second terminal accesses a second access node, the first access node and the second access node allocate a same location identifier to a plurality of accessing terminals respectively, and the method comprises:
the first terminal sending a data message to the second terminal via the first access node, with a source address of the data message being an identity identifier of the first terminal and a destination address being an identity identifier of the second terminal;
after receiving the data message, the first access node locally querying a location identifier of the second terminal according to the identity identifier of the second terminal, and if the location identifier is queried out, the first access node encapsulating the location identifier of the second terminal in the data message as the destination address, and encapsulating the location identifier of the first terminal as the source address, and forwarding the data message to the second access node through a packet data network;
the second access node stripping off the location identifiers of the first terminal and the second terminal in the data message, and sending the data message to the second terminal according to the identity identifier of the second terminal.

14. The method according to claim 13, further comprising:
if the first access node fails to locally query out the location identifier of the second terminal, sending a request, which carries the identity identifier of the second terminal, for querying the location identifier of the second terminal to a home identity location register of the second terminal;
after receiving the querying request, the identity location register querying the location identifier of the second terminal according to the identity identifier of the second terminal and returning the location identifier of the second terminal to the first access node, and the first access node locally storing mapping information between the identity identifier and the location identifier of the second terminal.

15. The method according to claim 13, wherein,
the network further comprises a packet forwarding function;
the method further comprises: if the first access node fails to locally query out the location identifier of the second terminal, encapsulating the location identifier of the first terminal in the data message as the source address, and sending the data message to a home packet forwarding function of the second terminal;
after receiving the data message, the home packet forwarding function of the second terminal querying the location identifier corresponding to the identity identifier of the second terminal, encapsulating the location identifier of the second terminal in the data message as the destination address, and then sending the data message to the second access node through the packet data network.

16. A method for allocating a location identifier, which is applied to a system having an architecture with separated identity identifier and location identifier and comprises the following steps of:
when a terminal switches or roams from a first access node to a second access node, the second access node reallocating a location identifier to the terminal, wherein, the second access node allocates a same location identifier to a plurality of terminals;
the first access node releasing the location identifier allocated to the terminal.

17. The method according to claim 16, further comprising: the second access node locally storing mapping information between an identity identifier and the location identifier of the terminal, and initiating a registration flow for the terminal to a home identity location register of the terminal, with the mapping information being carried, and the identity location register storing or updating the mapping information between the identity identifier and the location identifier of the terminal after receiving the mapping information.

18. A system for allocating a location identifier, which is applied to a network having an architecture with separated identity identifier and location identifier and comprises a terminal, a first access node and a second access node, wherein:
the second access node is configured to, when the terminal switches or roams from the first access node to the second access node, reallocate a location identifier to the terminal, wherein, the second access node is configured to allocate a same location identifier to a plurality of terminals;
the first access node is configured to release the location identifier allocated to the terminal.

19. The system according to claim 18, further comprising an identity location register, wherein:
the second access node is further configured to locally store mapping information between an identity identifier and the location identifier of the terminal, and initiate a registration flow for the terminal to a home identity location register of the terminal, with the mapping information being carried;
the identity location register is configured to store or update the mapping information between the identity identifier and the location identifier of the terminal.
